# EUROPEAN PATENT APPLICATION

(11) **EP 4 462 257 A1**
(43) Date of publication of application: **13.11.2024**
(21) Application number: 24173685.9
(22) Date of filing: 01.05.2024
(51) Int. Cl.: G06F 9/54, G06F 15/173

(54) **SYSTEM AND METHOD FOR MESSAGE OR DATA AGGREGATION IN COMPUTER NETWORKS**

(30) Priority: 01.05.2023 US 202318141595
(71) Applicant: Mellanox Technologies, Ltd., 2069200 Yokneam (IL)
(72) Inventor: GORENTLA VENKATA, Manjunath, 2069200 Yokneam (IL); VENKATESAN, Vishwanath, 2069200 Yokneam (IL); BLOCH, Gil, 2069200 Yokneam (IL)
(74) Representative: Kramer, Dani

(57) **Abstract**

Systems and methods herein are for message or data aggregation in computer networks in which at least one processor of a network module receives communication including messages having data, determines destination host machines for the messages, and aggregates a subset of the messages or the data to be transmitted to one of different destination host machines, where the aggregation is based at least in part on a bandwidth and a buffer availability associated with the one destination host machine, and where the buffer availability is determined from a status communication between the one destination host machine and the host machine.

## Description

### TECHNICAL FIELD

At least one embodiment pertains to data aggregation in computer networks. For example, messages or data are aggregated and transmitted based in part on a bandwidth and a buffer availability associated with a destination host machine.

### BACKGROUND

Parallel computing may use a multitude of processing resources to perform computations. For example, a single program multiple data model allows parallel processing units to perform the same tasks with different data, whereas a multiple program multiple data model allows parallel processing units to perform different tasks using different data. In all such parallel computing models, data handling in communications may seek to optimize memory allocations of available memory to the parallel processing units. For example, lower message rate of messages in the communications, such as a lower small message rate can be attributed to software impediments resulting in lower utilization of available hardware bandwidth.

### SUMMARY

The invention is defined by the claims. In order to illustrate the invention, aspects and embodiments which may or may not fall within the scope of the claims are described herein.

Systems and methods herein are for message or data aggregation in computer networks in which at least one processor of a network module receives communication including messages having data, determines destination host machines for the messages, and aggregates a subset of the messages or the data to be transmitted to one of different destination host machines, where the aggregation is based at least in part on a bandwidth and a buffer availability associated with the one destination host machine, and where the buffer availability is determined from a status communication between the one destination host machine and the host machine.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a system that is subject to embodiments of a network module to perform messages or data aggregation and transmission based in part on a bandwidth and a buffer availability associated with a destination host machine;
FIG. 2 illustrates aspects of a system associated with a network module to perform messages or data aggregation and transmission based in part on a bandwidth and a buffer availability associated with a destination host machine, according to at least one embodiment;
FIG. 3A illustrates further aspects of a network module to perform messages or data aggregation and transmission based in part on a bandwidth and a buffer availability associated with a destination host machine, according to at least one embodiment;
FIG. 3B illustrates still further aspects of a network module to perform messages or data aggregation and transmission based in part on a bandwidth and a buffer availability associated with a destination host machine, according to at least one embodiment;
FIG. 3C illustrates aspects of messages or data aggregation for transmission based in part on a bandwidth and a buffer availability associated with a destination host machine, according to at least one embodiment;
FIG. 3D illustrates aspects of flushing for messages or data aggregation and transmission based in part on a bandwidth and a buffer availability associated with a destination host machine, according to at least one embodiment;
FIG. 4 illustrates computer and processor aspects of a system associated with a network module to perform messages or data aggregation and transmission based in part on a bandwidth and a buffer availability associated with a destination host machine, according to at least one embodiment;
FIG. 5 illustrates a process flow for a system associated with a network module to perform messages or data aggregation and transmission based in part on a bandwidth and a buffer availability associated with a destination host machine, according to at least one embodiment;
FIG. 6 illustrates yet another process flow for a system associated with a network module to perform messages or data aggregation and transmission based in part on a bandwidth and a buffer availability, according to at least one embodiment; and
FIG. 7 illustrates a further process flow for a system associated with a network module to perform messages or data aggregation and transmission based in part on a bandwidth and a buffer availability, according to at least one embodiment.

### DETAILED DESCRIPTION

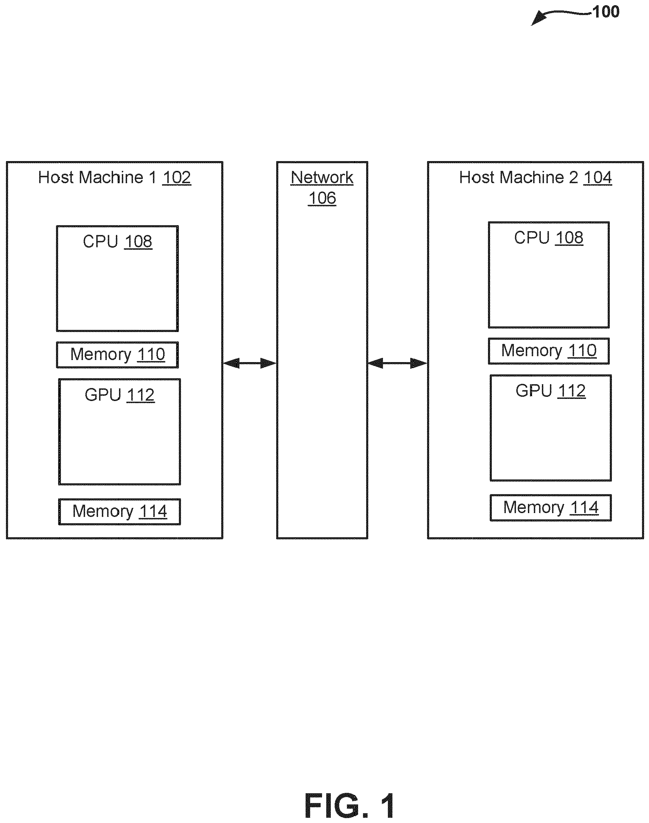

FIG. 1 illustrates a system 100 that is subject to embodiments of a network module to perform messages or data aggregation and transmission based in part on a bandwidth and a buffer availability associated with a destination host machine, as detailed herein. To address inefficiencies described above, in at least one embodiment, message and data aggregation for transmission may be performed by a network module that is implemented by hardware or performed by software executing on a processing unit (including application-specific integrated circuits (ASICs)) of a hardware, such as on a host machine, a network interface card (NIC), or a switch, based in part on a bandwidth and a buffer availability associated with a destination host machine. The communication includes messages having data that is received in the network module. The messages or the data can be sorted based in part on different destination host machines to which they are intended.

In at least one embodiment, a message includes a data packet, generally referred to as data, for transmitting to a destination host machine and to a destination individual element (IE) associated with an execution unit (EU) therein. The EU may be associated with a process of a destination processing unit, such as a GPU or a CPU. The data packet may include an array location within the destination IE and may include reference index. The destination IE may store the data whereas the destination EU may invoke a routine to get a value from the data for processing and to respond back to a source EU and its corresponding source IE. In at least one embodiment herein, messages or data are first aggregated according to a bandwidth and a buffer availability associated with the destination host machine.

In at least one embodiment, subsets of the messages or data for different destination host machines are first aggregated and then communicated to the different destination host machines based in part on respective bandwidth and buffer availability associated with the destination host machines. Further, the aggregation includes sorting and/or coalescing so that messages or data intended for a destination host machine (and a destination process) may be combined together. Still further, the sorting and/or coalescing may also aggregate values for similar operations. In doing so, an issue of latency in transmission is changed to an issue of bandwidth, where data is packaged to a larger size instead of being sent in a smaller size that may occupy a bandwidth. In at least one embodiment, better utilization of network bandwidth by conversion of a latency-bound transmission to a bandwidth-bound transmission is provided herein. The larger size, in at least one embodiment, may be dictated at least by a size of a buffer of a sending host machine than needs to be filled by the aggregating step before at least a subset of the communication is to be transmitted to one or more destination host machines.

In at least one embodiment, further, the destination host machines communicates its buffer size to a source host machine. The destination host machines include destination network modules that can inform the network module of a source or sending host machine as to its buffer availability. In this manner, there is no need to use an intermediate buffer to transfer data from a dynamic random access memory (DRAM) to an intermediate buffer; and instead, the buffer of a host machine can be filled at the aggregation step and the contents can be communicated once a predetermined threshold is reached. For example, a pre-registration of buffers may be performed to avoid any bounce from a destination buffer for regular transfer of data and also for aggregated data transfer.

In at least one embodiment, a flush operation can be performed for one or more of the buffers of the host machine, which serves as a memory fence to ensure the prior operations are completed before the buffers of the host machine is filled again. The flush operation can cause the transmission of the subset of the messages or the data, as aggregated, to the different destination host machines. Further, In at least one embodiment, execution units (EUs) of the host machine include threads, warps, and other groupings of processes. The buffer may be a data structure or other individual element (IE) to queue the communication. The data structure may be controlled by a single process represented by the EU, such as by a thread of an operating system (OS) or a processor unit (or processor).

In at least one embodiment, the EUs can each send messages associated with their respective processes to the network module. The network module aggregates and fills individual buffers that represent the IEs. There may be different IEs that are filled, according to destination threads, warps, and other groupings of processes. The IEs can be grouped as part of a single process for a host machine and, therefore, the respective processes can have different IE groups, but which are managed by the same network module. In the aggregation operation, the messages or data may be sorted according to different destination host machines and to different processes (receiving) EUs and IEs on the destination host machines, prior to communicating these messages or data. This ensures that bandwidth and buffer availability are both a basis for the transmission that can address latency and other failures described above.

In at least one embodiment, an issue addressed is that systems including Charm++^{®}, You've Got Mail (YGM)^{®}, and Conveyor^{®} focus on different communication patterns or rely on push and pull operations that may fail because of a lack of buffer space. For example, a push operation may fail with a lack of buffer space and a pull operation may fail for lack of items available in the queue. Still further, a system including TRAM^{®} with charm++ may focus specifically on many-to-many and all-to-all collective communication patterns. For example, in at least the YGM^{®} method, improvements to communication efficiency may be directed to small messages, but with focus on all-to-all communication patterns by allowing only one mailbox at a time, which limits such a process from handling complex communication patterns. Whereas Conveyor^{®} is an abstraction that can support aggregation, but that lacks flexibility to support message aggregation based on bandwidth and buffer availability of a destination host machine that has been communicated to a source host machine and using a threshold of a buffer on the source host machine prior to performing the flush operation. In addition, Conveyor^{®}-type abstractions may be architected on existing middleware's such as OpenSHMEM^{®}/MPI^{®}, which may include limits on utilizing low-level network hardware features for aggregation.

In at least one embodiment, a benefit by a network module to perform messages or data aggregation and transmission based in part on a bandwidth and a buffer availability associated with a destination host machine, is an elimination of issues due to lack of buffer space by the transmission occurring using aggregated messages or data. The network module aggregates both communication and data before sending packets to an appropriate destination to achieve a higher message rate and to improve bandwidth utilization, while leveraging software capabilities and hardware mechanisms.

In at least one embodiment, each network module includes an aggregator submodule that may have data structures, such as a group of IEs, that behave as queues. These data structure may be owned by a single process. The state of the queue (and by extension, the IE) may be controlled by a single process represented by the EU. The IE may not be shared between different processes by different EUs, for instance. Further, an EU can either be an OS process or an OS thread. There may be multiple EUs, owning an aggregator submodule, which may make these multiple EUs part of a same parallel job. A network module or the aggregator submodule (and its related submodules for sorting and transmission) may not be shared between processes of the different parallel jobs.

In at least one embodiment, a data structure herein can be either symmetric or asymmetric. For example, a data structure may be such that participating EUs have a same amount of buffer storage each. However, the data structures may also (or alternatively) have a different amount of buffer storage for each participating EU. In addition, creation of a data structure may be part of a synchronous operation. An aggregator submodule may be created or may exist within a network module. The network module causes the EUs to exchange information regarding buffer availability, such as a buffer storage size and flush threshold of a destination host machine.

In at least one embodiment, the network module herein may support insertion and coalescing of messages or data as part of the aggregation in the aggregator submodule. Further, the IEs associated with an aggregator submodule may be exposed with a queue interface to an application, such as to a High Performance Computing (HPC) application. The application can add and delete individual items to the data structure. The data structure can be flushed once a predetermined threshold is reached and the HPC can either make an explicit flush operation occur or can automatically require a flush operation to occur in the background. In at least one embodiment, however, such a network module may be implemented via aspects of a network library or an application programming interface (API). Still further, the network module may include submodules that are associated with the one or more of a network library, an API, or the application, such as the HPC application.

In at least one embodiment, a capability to coalesce messages or data, while exposing the interfaces to include items or to delete items to a data structure may be implemented either by Network Interface Card (NIC), a SmartNIC, or a switch that includes at least one processor, as part of the network module. The at least one processor (which may include an application-specific integrated circuits (ASICs)) can perform the transmission of the subset of the messages or the data in association with a central processing unit (CPU) or a graphical processing unit (GPU) of the host machine. The NIC may include a Host Channel Adapter (HCA).

Once an item of a message or from data is added to an IE, such above-referenced hardware comprising at least a processor may have complete state available to it to begin transmission from a host machine (such as, the associated EU), where the transmission may be caused by a flush operation of an IE of the associated EU. This causes a packet associated with the message or the data to be sent to a destination host machine (such as to an associated destination EU and received in a destination IE), without further intervention, such as without application intervention.

In at least one embodiment, completion of coalescing and transmission operations may include completion of the flush operation that may be initiated by a host EU, which requires the data transfer operation. Further, all EUs that have ownership of an aggregator submodule may participate in the flush operation, so that multiple IEs of multiple EUs are flushed at the same time. As there may be multiple EUs associated with a parallel processing unit of a host machine, these multiple EUs may participate in a flush operation to flush local items from associated host IEs to appropriate destination IEs of destination hosts (and their associated processes). In at least one embodiment, in a flush operation, the items (including messages or data) can be flushed either as a single item and can be flushed either in partial or complete manner. Further, a flush operation can be synchronous or asynchronous. In synchronous operations, all EUs may coordinate to conduct a flush operation. For example, all EUs may enter and exit a flush operation synchronously. In an asynchronous flush operation, the EUs can enter and exit a flush operation at different times.

The system and method herein further provides flow control in the network module. For example, when the aggregator submodule is provided, each EU understands buffer availability at each of the remote EUs. After local aggregation and before sending coalesced messages or data, the sending or initiation EU can ensure that buffer space is available at a remote EU of a destination host machine to support the aggregated data that is coalesced (including sorting) so that all messages and data intended for a destination host machine (and to a respective process or thread of the destination host machine) is sent to that remote EU and to the respective destination IEs associated there with.

In at least one embodiment, the system and method herein further incorporates message rate and bandwidth impact reduction. For example, the network module herein, instead of posting small messages or data sizes to a network fabric, post such messages and data as an aggregate and based in part on the bandwidth and the buffer availability of a destination host machine. This can result in amortizing of a cost of posting data and messages to a network fabric, by reducing a need for per-message doorbells and memory barriers. In at least one embodiment, the approaches herein include increasing a message rate as a result of bandwidth savings. Further, as coalescing can increase efficiency of an amount of data or messages posted to a network fabric, bandwidth utilization is increased. For example, a higher message rate of small messages in the transmissions may be replaced by (or combined to form) appropriately sized messages or data to eliminate software impediments of low utilization of available hardware bandwidth. This approach maintains the small message semantics of the application.

FIG. 1 illustrates a system 100 that is subject to embodiments of a network module to perform messages or data aggregation and transmission based in part on a bandwidth and a buffer availability associated with a destination host machine. The system 100 may include a source or sending host machine 1 102 that communicates with one or more other (destination) host machines 2 104 via a network 106. The network 106 may include switches and may be associated with NICs of the host machines 1, 2 102, 104. Further, the host machines 1, 2 102, 104 may include respective CPUs 108, GPUs 112, and memory 110, 114. The memory 110, 114 may be exclusive to the CPU or the GPU or may be partly accessible as shared memory in each host machine. A first illustrated memory 110 in FIG. 1 may be specific to a CPU may include DRAM and buffer or cache memory of the CPU 108. Similarly, a second illustrated memory 114 in FIG. 1 may be specific to a GPU 112 may include DRAM and buffer or cache memory of the GPU 112.

GPUDirect RDMA (GDR) is an approach to support HPC applications in RDMA networks, including in InfiniBand (IB) networks between GPUs 112. IB network adapters (HCAs) may be used to communicate (write/read data to/from) directly between GPUs 112. Further, certain programming models, including Partitioned Global Address Space (PGAS) (an example of which is OpenSHMEM^{®}), provide shared memory address space in the first or the second illustrated memory 110, 114 as abstractions to support certain communication semantics that may be one-side communications. One-sided communications, such as a remote get, a remote put, or a remote atomic operation may involve only one process. In application, for the singular process of host machine 102, to access and perform aspects on the memory of a destination host machine, a remote process need not be involved. However, the remote process has to cause a portion of a respective memory to be shared to the singular process or all processes in the job.

The ability to communicate between GPUs 112 without loading CPUs 108 of respective host machines 102, 104 may be within the scope of a Compute Unified Device Architecture (CUDA). However, even if CUDA-enabled operations are allowed between buffers (including cache) in the GPU's memory, support for data aggregation and transmission based in part on bandwidth and buffer availability is enabled by a network module described herein. In one example, a put operation may be provided to cause message or data transmission from a host GPU 112 of a host machine 102 to remote GPU 112 of a destination host machine 104. The network module herein is able to aggregate the messages or data, including to combine messages and data from different operations of different host machines, but directed to a destination host machine, and is able to provide a combined communication to be transmitted to the destination host machine 104. The aggregation is based in part on the bandwidth so that the bandwidth is fully utilized and is based in part on availability of the buffer space in the memory 110, 114 of the destination host machine 104.

In FIGS. 1-4 herein, the GPUs 112 are PCI Express (PCIe) devices that have their own memory and that enable data communication directly to the memory through the CUDA framework. For example, CUDA drivers can provide the GDR aspects for such communication. The CUDA drivers may be specific to IB HCA aspects to enable the GDR aspects for directly reading or writing between the memory 114 of the GPU2 112, without involving the CPUs 108 of the respective host machines 102, 104. Further, in the figures herein, a description in the plural to a singular feature illustrated may be understood as an embodiment applicable to the feature taken either as a singular feature or a plural feature, unless otherwise stated. Similarly, in the figures herein, a description in the singular to a plural feature illustrated may be understood as an embodiment applicable to the feature taken either as a singular feature or a plural feature, unless otherwise stated.

Programming models like Message Passing Interface (MPI) and PGAS may be used with CPU to CPU communication or with the CUDA-enabled GPU to GPU communication but may also support CPU to GPU communications that inter-node or intra-node (between the host machines 102, 104 or within respective host machines). In addition, CUDA-enabled GPUs may be used for computation at a kernel level, which may be related to a single process of a parallel processing unit of a host machine and may support data communication between CPU and GPU within the same host machine. However, programming models, such as the aforementioned MPI and PGAS may be used for communication between processes across host machines, including direct communication from memory between GPU to GPU.

The programming models represent part of a module to support communication for HPC applications. Some such programming models, including OpenSHMEM^{®} allow symmetric memory allocations so that host machines can access data remotely through a network 106. For example, processes of a CPU or a GPU 108, 112 in a host machine 102 can access data of a remote process, such as on a CPU or a GPU 108, 112 of a destination host machine 104. This access may be performed by specifying, in the programming model, a corresponding local symmetric variable that is mapped to the variable accessing data of the destination host machine 104. In at least one embodiment, the network module herein is enabled by a specific submodules in a programing model level.

Further, while OpenSHMEM^{®} may support communication between GPUs 112, memory management for the memory 110, 114 may be required to be separately performed between such devices, also including the CPUs of the respective host machines 102, 104. Symmetric allocation may not be supported at the programming level or an API across different memory types. As a result, message or data aggregation may be limited in the programming model, for instance. For example, the use of an intermediate memory by a process may be required to perform a communication between host machines so that, message or data is copied from a DRAM memory to an intermediate device memory, in the source host machine, before it is moved to a destination memory of a destination host machine.

In addition, in the system 100 in FIG. 1, in the case of GDR-based communication, the bandwidth for such communication may be limited by bandwidth offered by the adapters at-issue, such as the HCA. A network module herein can be implemented on one or more of a network library, an API, or an HPC application on a host machine; or can be implemented on a Network Interface Card (NIC), a SmartNIC, or a switch that includes at least one processor, as part of the network module. Then, the network module associated with such at least one processor can perform communications on behalf of a central processing unit (CPU) or a graphical processing unit (GPU) of the host machine.

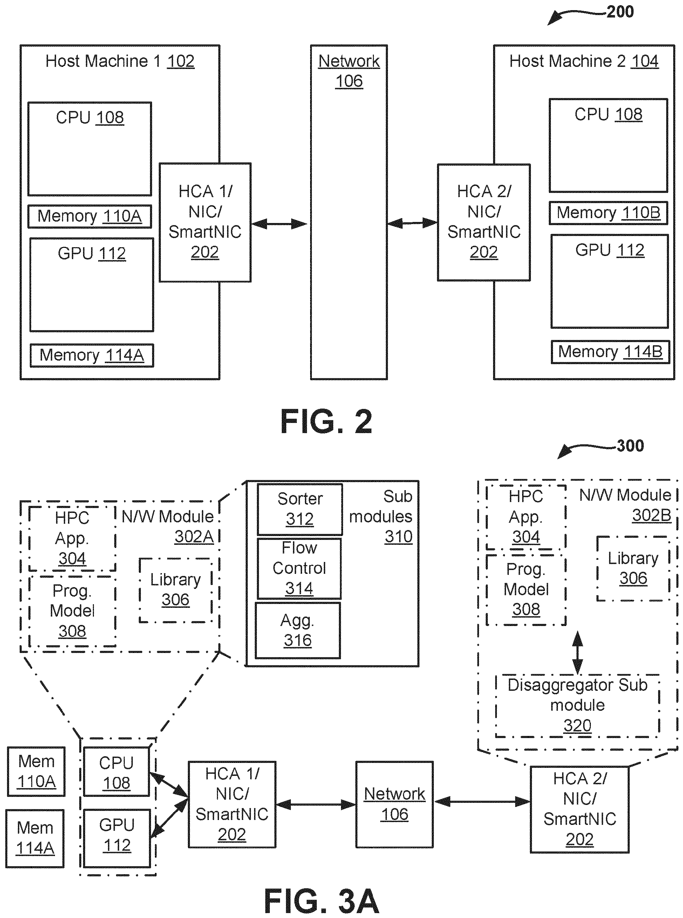

FIG. 2 illustrates aspects of a system 200 associated with a network module to perform messages or data aggregation and transmission based in part on a bandwidth and a buffer availability associated with a destination host machine, according to at least one embodiment. The system 200 may include a source or sending host machine 1 102, like in FIG. 1, which communicates with one or more other (destination) host machines 2 104 via a network 106. However, the source or sending host machine 1 102 as well as the other (destination) host machines 2 104 may include HCA, NIC, or SmartNIC 202 aspects that support messages or data aggregation and transmission based in part on a bandwidth and a buffer availability.

The network 106 may include switches and may be associated with the HCA, NIC, or SmartNIC 202 aspects of the host machines 1, 2 102, 104. Further, as described in FIG. 1, the host machines 1, 2 102, 104 in FIG. 2 may include respective CPUs 108, GPUs 112, and memory 110, 114. The memory 110, 114 may be exclusive to the CPU or the GPU or may be partly accessible as shared memory in each host machine. A first illustrated memory 110 in FIG. 1 may be specific to a CPU may include DRAM and buffer or cache memory of the CPU 108. Similarly, a second illustrated memory 114 in FIG. 1 may be specific to a GPU 112 may include DRAM and buffer or cache memory of the GPU 112.

FIG. 3A illustrates further aspects 300 of a network module 302A; B to perform messages or data aggregation and transmission based in part on a bandwidth and a buffer availability associated with a destination host machine, according to at least one embodiment. The network module 302A; B may be implemented by instructions to be executed by one or more of a CPU 108 or GPU 112 on each host machine 102; 104 that is to communicate via the network 106. In at least one embodiment, therefore, the system 200 for message or data aggregation in computer networks includes the source network module 302A of a host machine 102 to receive communication having messages. The messages may include data for transmission and may be packetized as by the HCA, NIC, or SmartNIC 202 aspects of the source host machine 1 102.

In at least one embodiment, the source network module 302A may be implemented by one or more of an HPC application 304, a library (such as, a code library) 306, or a programming model (include APIs) 308 that may each include instructions executable on a CPU 108 or a GPU 112 to be user facing with background operations (such as, the HPC application) or may be background operations (such as, the library and the programming model). For example, an HPC application 304 implementation may include instructions under different submodules 310, such as a sorter submodule 312, a flow control submodule 314, and an aggregator submodule 316. Such instructions, in this instance, may be routines to be executed in a CPU or a GPU.

In at least one embodiment, the aggregator submodule 316 may bring together different messages or data meant for a destination host machine. The sorter submodule 316 may assist in this aspect but may also perform further sorting to bring together messages or data intended for a same EU or associated with a same operation, for instance. The flow control submodule 314 may provide the status communication or message. For example, while preparing the aggregator submodule 316, the flow control submodule 314 of the EUs 352A; B can exchange information regarding the buffer availability, such as the buffer size and also, a flush threshold. Then, because each local host machine understands its buffer availability, such understanding may be shared to the remote EUs, such as to an EU 352A of the source host machine. Upon local aggregation, and before sending coalesced data, a flow control submodule 314 associated with the source EU 352A can ensure that buffer space is available as associated with the destination EU 352B.

In at least one embodiment, a programming model 308 may include APIs under different submodules 310, such as a sorter submodule API 312, a flow control submodule API 314, and an aggregator submodule API 316. Such APIs, in this instance, may be associated together to be executed in a CPU or a GPU. In at least one embodiment, a library 306 implementation may include emulation capabilities under different submodules 310, such as a sorter submodule emulator 312, a flow control submodule emulator 314, and an aggregator submodule emulator 316. Therefore, such emulators cab be run on a CPU or GPU without a need for native network hardware support so that a network module 302A; B can perform messages or data aggregation and transmission based in part on a bandwidth and a buffer availability associated with a destination host machine can be emulated in software.

In at least one embodiment, the source network module 302A, by virtue of the submodules 312-316 may perform functions including to determine destination host machines for messages to be communicated. For example, a process of the CPU or GPU 108, 112 may generate messages that are temporarily associated with the memory 110A, 114A for transmission to a destination host machine 104 associated with a destination process. The source network module 302A can cause aggregation of a subset of the messages or the data based at least in part on the intended destination host machine. The source network module 302A can simultaneously aggregate multiple individual elements directed to different destination host machines and based in part on a bandwidth and a buffer availability associated with each of the different destination host machines. The source network module 302A can communicate the subset of the messages or the data to the different destination host machines.

In at least one embodiment, the system 200 includes a disaggregator submodule 320 in each host computing device, such as in a destination network module 302B of the HCA, NIC, or SmartNIC 202 aspect of a destination computing device 104. The disaggregator submodule 320 is capable of disaggregating the messages or the data received and is capable of communicating the disaggregated messages or data to the destination network module 302B of the destination computing device 104. Further, like the sending or source host machine 102, the destination network module 302B of the destination host machine 104 may be implemented by one or more of an HPC application 304, a library (such as, a code library) 306, or a programming model (include APIs) 308 that may each include instructions executable on a CPU 108 or a GPU 112 to be user facing with background operations (such as, the HPC application) or may be background operations (such as, the library and the programming model). Therefore, the disaggregated messages or data may be processed by any of the HPC application 304, a library (such as, a code library) 306, or a programming model (include APIs) 308 on the destination host machine 102.

In at least one embodiment, the disaggregator 320 is able to separate the messages or the data into distinct further subsets directed to different processes (such as different threads or warps) of the CPU and/or GPU 108, 112 of the destination host machine 104. Then the further subsets may be queued into distinct IEs of the destination host machine 104 for consumption by the different processes. In at least one embodiment, the aspects 300 in FIG. 3A, by virtue of the network module 302A; B implemented at a programming model or a network library. At the programming level, such an implementation reduces pressure on internal buses for the host machine 102 and also reduces consumption of CPU and GPU resources. In at least one embodiment, however, the network module 302A; B, in such an implementation, may be directed to one EU (which may be a process or thread). At the network library, an implementation may be directed to multiple EUs, but may consume more CPU resources.

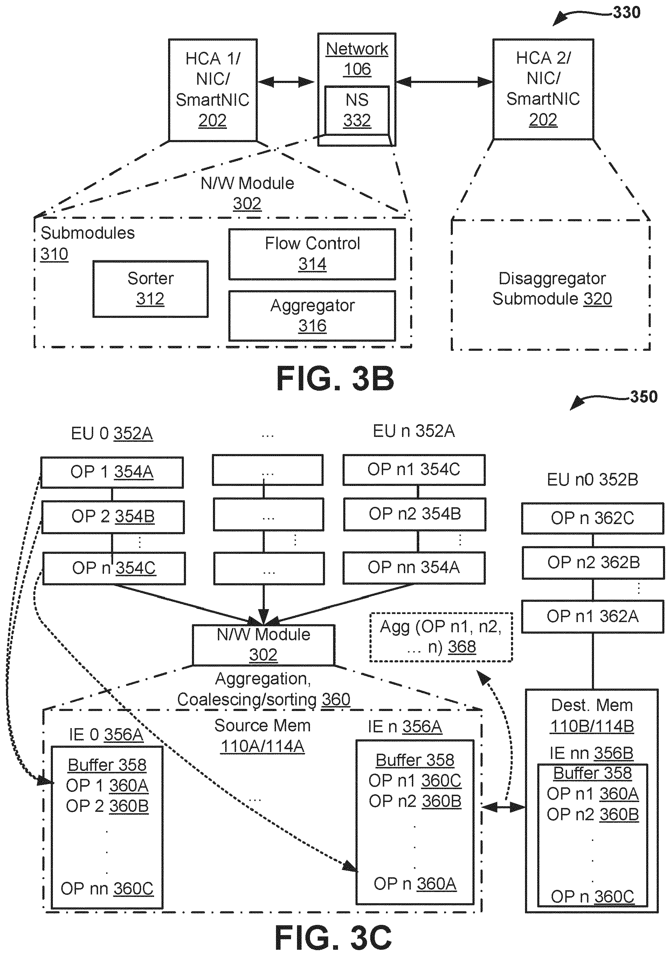

FIG. 3B illustrates still further aspects 330 of a network module to perform messages or data aggregation and transmission based in part on a bandwidth and a buffer availability associated with a destination host machine, according to at least one embodiment. Differently than the aspects 300 in FIG. 3A, a network module 302A; B may be implemented by instructions to be executed by one or more processor units on a HCA, NIC, or SmartNIC 202; or in a network switch 332 in a network 106. As such, a system 200 for message or data aggregation in computer networks includes the network module 302A in a HCA, NIC, or SmartNIC 202; or in a network switch (NS) 332 to receive communication having messages from one or more host machines 102. The messages may include data for transmission and may be packetized as by the HCA, NIC, or SmartNIC 202 or the NS 332.

The aspects 330 in FIG. 3B, therefore, implement a network module 302A; B at a network interface or at a network switch so as to reduce consumption of CPU or GPU resources and to aggregate from multiple EUs or host machines. However, there may be limited buffer availability at the network interface or at a network switch. As also illustrated in FIG. 3B, the network interface of each destination host machine may include a disaggregator 320 (in a destination network module 302B) that is able to separate the messages or the data into distinct further subsets directed to different processes (such as different threads or warps) of the CPU and/or GPU 108, 112 of different destination host machines 104. Then, the further subsets may be queued into distinct IEs of the different destination host machines 104 for consumption by their respective different processes.

FIG. 3C illustrates aspects 350 of messages or data aggregation for transmission based in part on a bandwidth and a buffer availability associated with a destination host machine, according to at least one embodiment. The aspects 350 are associated with a network module 302A; B and include execution units (EUs) EU 1 - EU n 352A and individual elements (IEs) IE 1 - IE n 356A (within the source memory 110A/114A). The destination host machine 104 may include its IE nn 356B and its EUs, such as EU n0 352B to process values in the messages or data of the IE nn 356B.

The IEs 356A; B behave as queues and represent one or more data structures that are owned by a single EU. In at least one embodiment, the IEs 356A; B for an EU 352A; B may be created in a synchronous operation. The EUs 352A; B can either be an OS process or an OS thread. Further, the IEs 356A; B can be either symmetric or asymmetric. When the data structure is a buffer storage, such buffer storage 358 may be the same or different in each IE 356A; B of an EU 352A; B. However, in at least one embodiment, the buffer storage 358 may be shared for different EUs 352A; B of different host machines, when the network module 302A; B is in a network switch.

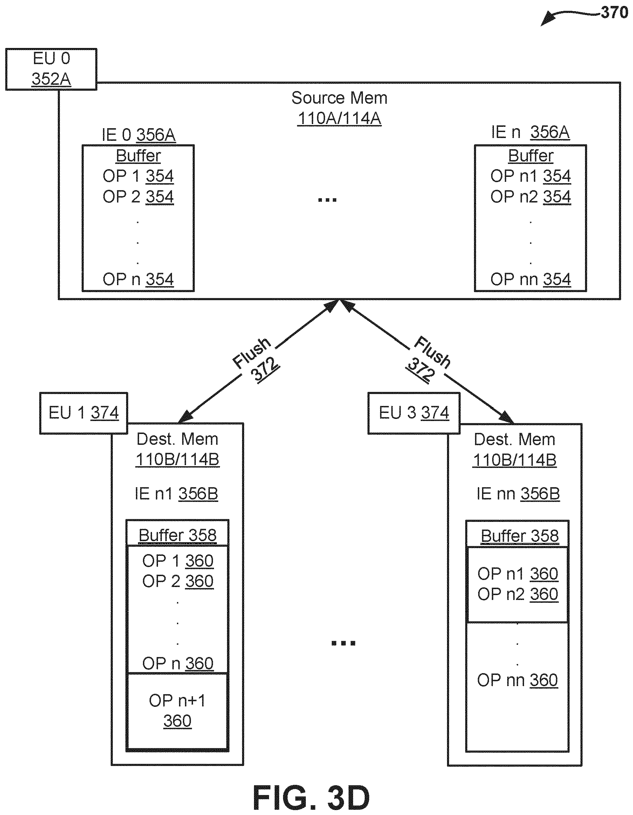

In at least one embodiment, as the network module 302A; B may be implemented in an HCA, Network Card or NS, coalescing capability is also implemented by the HCA, Network Card or NS. FIG. 3C illustrates that different EUs 352A; B may issue different operations (illustrated by the different fill patterns), including a put operation (OP) 354A, a get OP 354B, and an atomic OP 354C, which all apply to different EUs 352A; B. An order or sequence of respective operations 345A-C may be associated with an EU performed by an EU. In at least one embodiment, each of the OPs 354A-C (and 362A-C) illustrated in FIGS. 3C, 3D is in association to an EU to be performed on a value underlying therein. For example, a put, a get, or an atomic operation (OP) uses a value from the message or data underlying the OP references 360A-C, in at least the IEs 356A, B illustrated. In addition to the value, an index may be also provided to reference a sequence or order of the operations, for instance.

The operations can therefore apply to messages or data 354A-C associated with the respective EU. The messages or data 354A-C may be passed over to the source network module 302A to be queued as a data structure of messages or data 360A-C in respective IEs 356A. The network module 302A is associated with multiple IEs 356A that may include buffers 358 to queue the messages or data 360A-C of the underlying operations. Further, aggregation and coalescing/sorting 360 may be performed at the same time or in a sequence by the source network module 302A to fill the buffers 358.

In at least one embodiment, certain buffers 358 may be associated with a source memory 110A/114A of the source host machine 102. The queues in the buffers 358 may be arranged in order or sequence of the applied operations, as illustrated by the shading, to maintain operational semantics. However, as part of the aggregating, coalescing/sorting 360 operation in a network module 302, messages or data 354C from an EU 352A (such as, EU 0) that is intended for a different host machine than other messages or data 354A, B of the same EU 352A may be queued together (such as, in an IE n 356A) with further messages or data of other EUs (such as EU n) 3 52A that are all to be transmitted to the same destination IE (such as IE nn 356B) of the destination host machine 104 (for a destination EU and process of the destination host machine).

In at least one embodiment, the aggregating, coalescing/sorting 360 operation may include a coalescing and/or sorting operations for the messages or the data, as part of the aggregation of the subset of the messages or the data, where the coalescing operation is based at least in part on at least one operation associated with the subset of the messages or the data. The sorting may be to enable all messages or data for a destination host machine, an operation, or a process, to be combined for transmission. For example, data for all put operations and associated with the same EU may be combined and similar combinations may be applied to underlying data for other semantic operations. This is illustrated in part in the aggregated communication 368 having the aggregated OP n1, n2, ... n values and may also include an index to provide a sequence or order of the values. In at least one embodiment, the aggregating, coalescing/sorting 360 operation, for the different source IEs 0-n 356A, may be performed based at least in part on a bandwidth and a buffer availability associated with different destination host machines 104 that are a target destination for the different source IEs 0-n 356A. In at least one embodiment, each of the operations OP 1 - n 354A-C may be sent via different channels to the destination host machines, once aggregated to meet the bandwidth and the buffer availability requirements.

Further, the buffer availability may be communicated from different destination host machines 104 to the source host machine 102. In at least one embodiment, status messages or communication that are other than for operation by a EU of a host machine may be exchanged between the different network modules 302A; B of the different host machines of a network 106. The different network modules 302A; B may populate or determine information about buffer availability and bandwidth between the different network modules based in part on information included within or associated with the status messages. Further, the status messages may be transmitted over the same network 106 as the messages or data but may be tagged in a manner indicative of a status message to a processor unit of each network module. Still further, a latency associated with a transmit time and response of a status message may be additionally used to determine the bandwidth. For example, the size of the status message (or the response packets), latency, and any serialization time may be used in part to determine throughput and to determine bandwidth. Therefore, the bandwidth for the aggregation can be determined based, at least in part, on the status communication.

The bandwidth may be determined by a network module using status messages transmitted from the network module and acknowledged, in some manner by a receiving network module, back to the network module. For example, based in part on time sent and time received for a status message or a combination of a status message and an acknowledgment, bandwidth computations may be made and associated to a buffer size, such as to a predetermined threshold for a buffer 358. This is so that a buffer associated with the network module may be filled with aggregated messages and data till the predetermined threshold of the buffer is reached, where the predetermined threshold is associated with the bandwidth. However, as also described herein, the predetermined threshold may be additionally associated with the buffer availability of the destination host machine, as provided in a status message, for instance. The network module can perform transmission of a subset of the messages or the data (that is a subset directed to a specific destination host machine), based upon the predetermined threshold of the buffer being reached.

In at least one embodiment, at certain scales of deployment, congestion events during aggregated communication may occur if multiple nodes are trying to communicate to a same destination host machine and a same EU at a same time. To address this, in view of bandwidth limitations, static or dynamic bandwidth limitations may be applied to the aggregated communications. The use of the status communication may represent dynamic bandwidth limitations to be applied for the aggregated communication where the bandwidth at the time of the aggregated communication can be determined using the status communication. In static bandwidth limitations, a source host machine 102 determines priority for operations 354A-C or for processes or EUs 352A. For example, static allocation of channels may be performed for certain operations 354A-C in a EU or for EUs 352A, as a whole. The separate channels may apply then for values of OP 1 354A and for OP 2 354B of FU0 352A, so that they are aggregated as part of different aggregated communications but intended for the same EU of a destination host machine.

In at least one embodiment, every host machine 102, 104 or network module 302 may be able to provide priority determinations for aggregated communication 368. In at least one embodiment, the priority may be determined and set at the time of the creation of IEs 356A for a process. This approach allows for priority communication so that the aggregation occurs based at least in part on the static bandwidth. For example, the available bandwidth may be divided into classes and channels. Then, aggregated communications 368 may be prioritized from the source host machine or network module to occupy a bandwidth in addition to the buffer availability indicated to the source host machine or a network module.

Further, a buffer availability may be provided in the status messages from a destination network module of a destination host machine to a source network module that is intending to transmit messages and data to the destination host machine. For example, a data object that is symmetric to available space in a buffer (such as in IE nn 356 of a destination memory 110B/114B) may be generated to represent a data structure of a destination IE of a destination host machine 104. A size of the data object may be communicated from the destination EU of a destination host machine to a source host machine. The predetermined threshold of a buffer 358 of the source host machine may be modified or adjusted based in part on the size of the data object. As such, each buffer 358 with such a predetermined threshold (including the buffer availability) may be filled with messages or data aggregated for a respective destination process of a respective destination host machine. The buffer 358 contents may be flushed to an IE nn 356B of the destination memory 110B/114B to take advantage of the bandwidth and the buffer availability of the IE nn 356B on the destination host machine.

In at least one embodiment, different destination host machines 104 may include or may be associated with a same or different destination memory 110B/114B. The destination memory 110B/114B may include corresponding IEs (such as, IE nn 356B) that are implemented as data structures for corresponding EUs. The data structures may be physically implemented by buffers 358 to queue the messages or data 360 of the underlying operations 354A-C from the source host machine 102. The messages or data 360 that are aggregated and received in a destination host machine 104 may be first passed through a disaggregator to cause the messages or data 360 to be disaggregated and then distributed to different IEs associated with the respective destination host machine and, further, with respective process. In at least one embodiment, the messages or data 360A-C in one or more IEs 356A can be moved to the destination host machine or destination IE 35 6B by a flush operation, without application intervention, such as without an HPC application requiring such communication.

FIG. 3D illustrates aspects 370 of flushing for messages or data aggregation and transmission based in part on a bandwidth and a buffer availability associated with a destination host machine, according to at least one embodiment. In at least one embodiment, a flush operation 372 may be initiated in a network module 102 by an EU 352A that completes a filling operation to an IE 356A in a host machine 102 (or from multiple host machines 102 when a network module 102 having the IE 356A is implemented in a network switch). In at least one embodiment, while one EU 352A is illustrated, multiple EUs 352A can have ownership of an aggregator submodule of the network module 302A and the multiple source EUs 352A can participate in the flush operation 372.

Further, all EUs of all source host machines 102 participating in the flush operation 372 can flush their IEs 0-n 356A, from source memory 110A/114A, to the appropriate destination IEs n1-nn 356B associated with destination EUs 374B (352B) of the destination memory 110B/114B in the destination host machines 104. For the destination host machines 104, a disaggregator submodule 320 of a network module 302B can disaggregate the messages or data received. The network module 302B of the destination host machine 104 can queue the messages or data received into the respective destination IEs IE n1-nn 356B of respective destination processes, represented by a destination EU n0 352B. In at least one embodiment, during the flush operation 372, the messages or data can be flushed either as a single item, a partial item, or a complete item from the IEs 0-n 356A of source memory 110A/114A. The flush operation can be synchronous or asynchronous, in at least one embodiment.

Further, the messages received in a communication in host computing device 102 and intended for multiple destination computing devices 104 may include data intended for different processes performed by the different destination computing devices 104. In at least one embodiment, the network module 302A may remove received metadata from different subsets of the messages based in part on different subset of the messages destined for different destination host machines. The network module 302A can aggregate data for each of the different subsets of the messages to provide different subsets of the data. The network module 302A can then add new metadata to the subset of the data. The new metadata may be to identify at least an EU 374B associated with one of the destination host machines 104. Further, the subset of the data is to be received by a process or thread of the execution unit, where the process is associated with one of the IE n1-nn 356B associated with destination memory 110B/114B.

In at least one embodiment, the messages received in a communication in host computing device 102 and intended for multiple destination computing devices 104 may be intended for different processes performed by the different destination computing devices 104. A network module 302A may retain received metadata from different subsets of the messages, but may also add additional metadata based, at least in part, on different subset of the messages destined for different destination host machines or to different processes of a destination host machine. The network module 302A can aggregate the messages with additional metadata that can inform a disaggregator submodule 320 as to how each of the different subsets of the messages are to be distributed to different EUs 374B associated with the destination host machines 104 and further, to different process associated with different IE n1-nn 356B of those different EUs 374B.

In at least one embodiment, one or more of a network library, an application programming interface (API), or a High-Performance Computing (HPC) application is part of a network module 302A on a host machine 102. The network library, API, or HPC application can initiate the transmission of the subset of the messages or the data between the host machine 102 and one of the destination host machines 104. In at least one embodiment, an NIC, a SmartNIC, or a switch including at least one processor may be as part of the network module 302A; B. The at least one processor (including ASICs) can perform the transmission of the subset of the messages or the data between the host machine 102 and one of the destination host machines 104, on behalf of a central processing unit (CPU) or a graphical processing unit (GPU) of the host machine 102.

In at least one embodiment, a SmartNIC is able to provide its own communications to be transmitted between the SmartNIC and a destination host machine or another SmartNIC. In such an embodiment, the SmartNIC is not merely transmitting messages or data received from a host machine 102. A SmartNIC includes a processing unit to offload communication tasks from a CPU or even a GPU. The SmartNIC may incorporate a network module 302A to perform the aggregation of messages or data based at least in part on a bandwidth and a buffer availability associated with the one of the plurality of destination host machines. Therefore, the SmartNIC can perform the transmission of the subset of the messages or the data on behalf of a CPU or a GPU of the host machine.

Further, the network module 302A can aggregate the subset of the data in a buffer 358 that is associated with the network module till a predetermined threshold of the buffer is reached. The network module is to perform the transmission of the subset of the messages or the data upon the predetermined threshold of the buffer being reached. In at least one embodiment, the network module 302A is further to perform a flush operation 372, which in turn can cause the transmission of the subset of the messages or the data to the one of the plurality of destination host machines. The flush operation 372 may be associated with the predetermined threshold to automatically flush the messages or data from the host machine IEs to the destination IEs.

In at least one embodiment, one or more of the network modules 302A; B associated with a network 106 can also be associated with buffers of different host machines, NICs, SmartNICs, or switches. This arrangement allows efficient transmission messages or data across different network devices of the network 106. In at least one embodiment, the buffers available for such transmission are registered with the network modules 302. For example, a cache of each of the network modules 302 can be used to retain the buffers and buffer availability information received from the buffers of the destination host machines via the status communications.

Further, in one example, a cache may be provided in a library 306 associated with a network module 302. The buffers may be identified, along with addresses for each of the host machines, as part of such a registry. For an incoming message or a status communication, a verification may be performed that an address of the message or the status communication is within the cache. To the extent that this is not the case, the address may be used to register a buffer of a new destination host machine. Still further, the network module 302A of the host machine 102 is able to receive status communication, when it is ready to transmit an aggregated communication 368, where the status communication is associated with buffer availability from a destination network module 302B of each of the destination host machines 104 for which messages and data are intended to be transmitted from the host machine 102. The aggregated communication 368 may be flushed to the destination host machine but could also be changed according to the buffer availability indicated in the status communication.

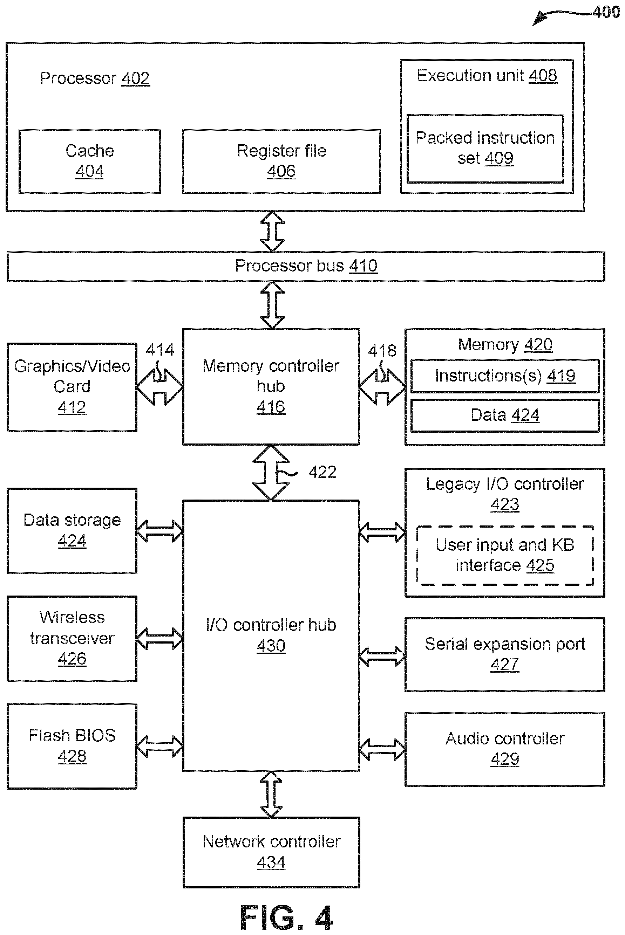

FIG. 4 illustrates computer and processor aspects 400 of a system associated with a network module to perform messages or data aggregation and transmission based in part on a bandwidth and a buffer availability associated with a destination host machine, according to at least one embodiment. The computer and processor aspects 400 may be performed by one or more processors that include a system-on-a-chip (SOC) or some combination thereof formed with a processor that may include execution units to execute an instruction, according to at least one embodiment. Such one or more processors may include CPUs and GPUs. Further, the computer and processor aspects may be within one or more of the controller 408 or the adapter 406.

In at least one embodiment, the computer and processor aspects 400 may include, without limitation, a component, such as a processor 402 to employ execution units including logic to perform algorithms for process data, in accordance with present disclosure, such as in embodiment described herein. In at least one embodiment, the computer and processor aspects 400 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, the computer and processor aspects 400 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, the computer and processor aspects 400 may include, without limitation, a processor 402 that may include, without limitation, one or more execution units 408 to perform aspects according to techniques described with respect to at least one or more of FIGS. 1-3D and 5-7 herein. In at least one embodiment, the computer and processor aspects 400 is a single processor desktop or server system, but in another embodiment, the computer and processor aspects 400 may be a multiprocessor system.

In at least one embodiment, the processor 402 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, a processor 402 may be coupled to a processor bus 410 that may transmit data signals between processor 402 and other components in computer system 400.

In at least one embodiment, a processor 402 may include, without limitation, a Level 1 ("L1") internal cache memory ("cache") 404. In at least one embodiment, a processor 402 may have a single internal cache or multiple levels of internal cache. In at least one embodiment, cache memory may reside external to a processor 402. Other embodiments may also include a combination of both internal and external caches depending on particular implementation and needs. In at least one embodiment, a register file 406 may store different types of data in various registers including, without limitation, integer registers, floating point registers, status registers, and an instruction pointer register.

In at least one embodiment, an execution unit 408, including, without limitation, logic to perform integer and floating point operations, also resides in a processor 402. In at least one embodiment, a processor 402 may also include a microcode ("ucode") read only memory ("ROM") that stores microcode for certain macro instructions. In at least one embodiment, an execution unit 408 may include logic to handle a packed instruction set 409.

In at least one embodiment, by including a packed instruction set 409 in an instruction set of a general-purpose processor, along with associated circuitry to execute instructions, operations used by many multimedia applications may be performed using packed data in a processor 402. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, an execution unit 408 may also be used in microcontrollers, embedded processors, graphics devices, DSPs, and other types of logic circuits. In at least one embodiment, the computer and processor aspects 400 may include, without limitation, a memory 420. In at least one embodiment, a memory 420 may be a Dynamic Random Access Memory ("DRAM") device, a Static Random Access Memory ("SRAM") device, a flash memory device, or another memory device. In at least one embodiment, a memory 420 may store instruction(s) 419 and/or data 421 represented by data signals that may be executed by a processor 402.

In at least one embodiment, a system logic chip may be coupled to a processor bus 410 and a memory 420. In at least one embodiment, a system logic chip may include, without limitation, a memory controller hub ("MCH") 416, and processor 402 may communicate with MCH 416 via processor bus 410. In at least one embodiment, an MCH 416 may provide a high bandwidth memory path 418 to a memory 420 for instruction and data storage and for storage of graphics commands, data and textures. In at least one embodiment, an MCH 416 may direct data signals between a processor 402, a memory 420, and other components in the computer and processor aspects 400 and to bridge data signals between a processor bus 410, a memory 420, and a system I/O interface 422. In at least one embodiment, a system logic chip may provide a graphics port for coupling to a graphics controller. In at least one embodiment, an MCH 416 may be coupled to a memory 420 through a high bandwidth memory path 418 and a graphics/video card 412 may be coupled to an MCH 416 through an Accelerated Graphics Port ("AGP") interconnect 414.

In at least one embodiment, the computer and processor aspects 400 may use a system I/O interface 422 as a proprietary hub interface bus to couple an MCH 416 to an I/O controller hub ("ICH") 430. In at least one embodiment, an ICH 430 may provide direct connections to some I/O devices via a local I/O bus. In at least one embodiment, a local I/O bus may include, without limitation, a high-speed I/O bus for connecting peripherals to a memory 420, a chipset, and processor 402. Examples may include, without limitation, an audio controller 429, a firmware hub ("flash BIOS") 428, a wireless transceiver 426, a data storage 424, a legacy I/O controller 423 containing user input and keyboard interfaces 425, a serial expansion port 427, such as a Universal Serial Bus ("USB") port, and a network controller 434. In at least one embodiment, data storage 424 may comprise a hard disk drive, a floppy disk drive, a CD-ROM device, a flash memory device, or other mass storage device.

In at least one embodiment, FIG. 4 illustrates computer and processor aspects 400, which includes interconnected hardware devices or "chips", whereas in other embodiments, FIG. 4 may illustrate an exemplary SoC. In at least one embodiment, devices illustrated in FIG. 4 may be interconnected with proprietary interconnects, standardized interconnects (e.g., PCIe) or some combination thereof. In at least one embodiment, one or more components of the computer and processor aspects 400 that are interconnected using compute express link (CXL) interconnects.

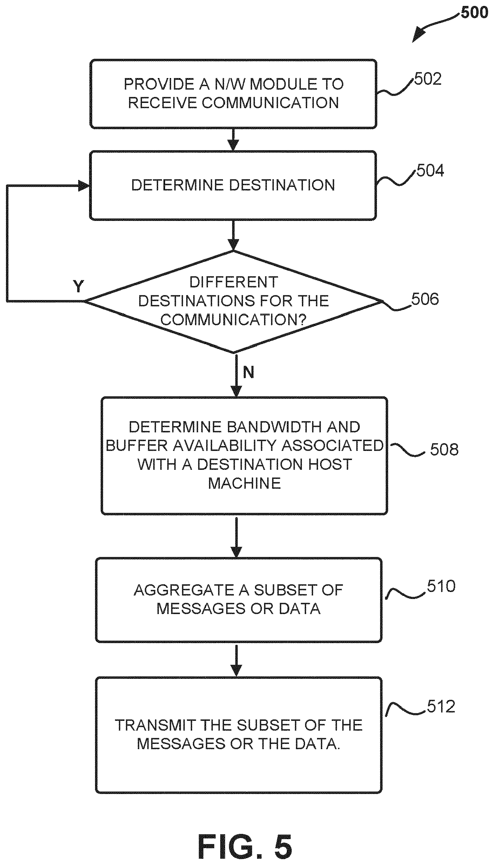

FIG. 5 illustrates a process flow or method 500 for a system associated with a network module to perform messages or data aggregation and transmission based in part on a bandwidth and a buffer availability associated with a destination host machine, according to at least one embodiment. In at least one embodiment, the method 500 includes providing (502) a network module to be associated with a host machine and to receive communication including messages having data. The method includes determining (504), in the network module, a destination, such as destination host machines for the messages. In at least one embodiment, the destination host machines may be determined based in part on processes or EUs to which the communication is to be transmitted.

The method 500 includes verifying (506) that different destination host computing devices are designated for the transmission. In at least one embodiment, as multiple messages and data may be aggregated by the method 500, a determination (504) for a destination may be revisited for each message or data and the verification (506) may filter or otherwise allow only transmissions meant for a certain destination to be processed further in steps 508-510. A step in the method 500 may include determining (508) a bandwidth and a buffer availability associated with one destination host machine of the destination host machines. For example, the determining (508) of the bandwidth and the buffer availability may be from a status communication (such as, a status message) sent between the one destination host machine machines and the host machine.

The method 500 includes aggregating (510) a subset of the messages or the data to be transmitted to the one destination host machine. The aggregating (510) may be based in part on the bandwidth and the buffer availability associated with the one of the destination host machine. The method includes transmitting (512) the subset of the messages or the data to the one destination host machine of the multiple destination host machines.

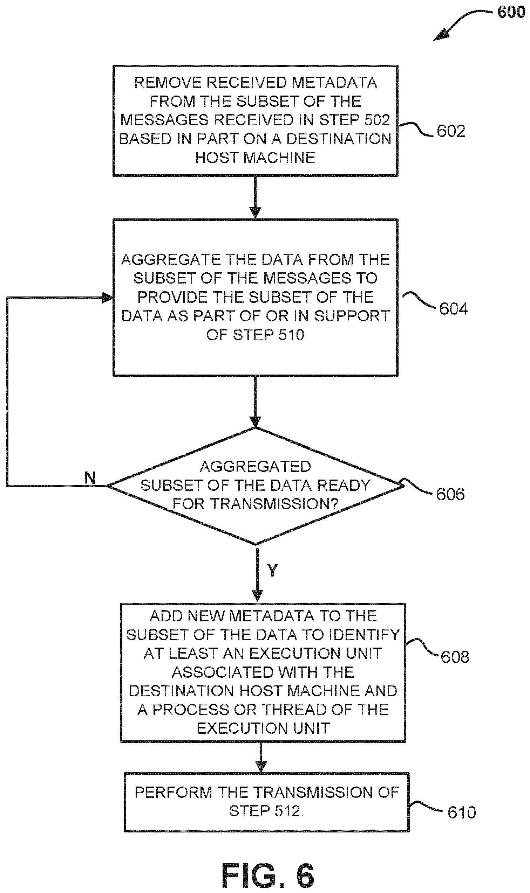

FIG. 6 illustrates yet another process flow or method (600) for a system associated with a network module to perform messages or data aggregation and transmission based in part on a bandwidth and a buffer availability, according to at least one embodiment. In at least one embodiment, the method 600 includes removing received metadata from the subset of the messages in step 502, based in part on the subset of the messages destined for the one of the destination host machines. For example, as the messages in the subset are destined for the same destination host machine, process, or EU, the received metadata from the messages may be removed.

The method 600 includes aggregating (604), as part of or in support of step 510, the data from the subset of the messages to provide the subset of the data. The method 600 includes a verifying (606) step that all messages destined for a destination host machine, process, or EU have their received metadata removed to make the underlying data of those messages ready for transmission. The method 600 includes adding (608) new metadata to the subset of the data. The new metadata is to identify at least an EU associated with the one of the destination host machines. Further, the subset of the data is to be received by a process or thread of the EU. The method 600 includes performing (610) the transmission in step 512.

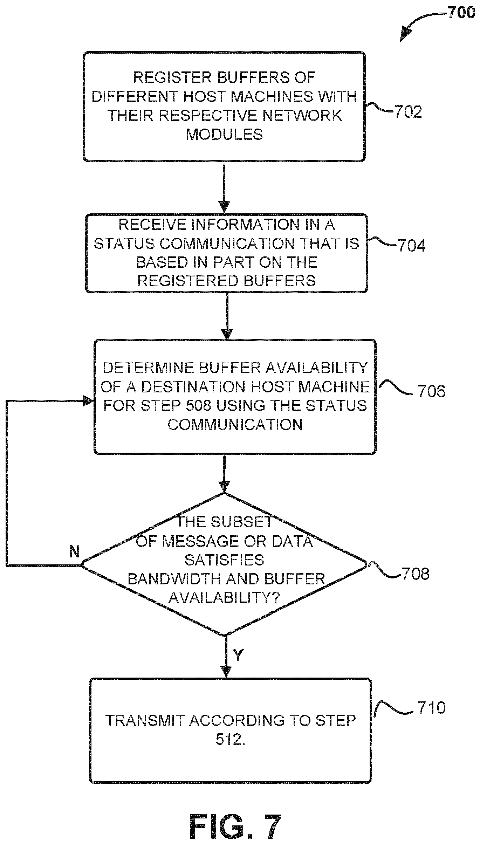

FIG. 7 illustrates a further process flow or method 700 for a system associated with a network module to perform messages or data aggregation and transmission based in part on a bandwidth and a buffer availability, according to at least one embodiment. In at least one embodiment, the method 700 includes registering (702), with the network module of the host machine or with a destination network module of the one of the plurality of destination host machines, all the available buffers that are associated with the host machine and with the one of the destination host machines, such as for the destination host machine of step 504. The method 700 includes receiving (704) information in a status communication or message, where the information is based in part on the registered buffers. The method 700 includes determining (706) a bandwidth and a buffer availability, in the network module of the host machine, from the status message. Further, steps 704 and 706 together represent a step for receiving, in the network module of the host machine, information associated with the buffer availability, from the destination network module of the one destination host machines.

A verification (708) may be performed that the subset of the messages or data satisfies a bandwidth and a buffer availability. For example, a threshold size of the source buffer or IE may be set so that the aggregating step does not overfill the source buffer to a size that cannot be received because of less buffer availability on the destination host machine. Similarly, the threshold size of the source buffer or IE may also be set so that the aggregating step does not exceed the bandwidth capability between a source host machine and the destination host machine. The method 700 includes transmitting (710) the subset according to step 512 of the method 500 in FIG. 5.

In at least one embodiment, one or more of the methods herein may include a step or a sub-step for providing one or more of a network library, an API, or a HPC application on the host machine, as part of the network module. Further, this step may be part of a step 502 for providing a network module to be associated with a host machine and to receive communication including messages having data. Then, a further step or sub-step of such one or more methods may include initiating, using the one or more of the network library, the API, or the HPC application, the transmission (512) of the subset of the messages or the data between the host machine and the one of the plurality of destination host machines.

In at least one embodiment, one or more of the methods herein may include a step or a sub-step for providing a NIC, a SmartNIC, or a switch that comprises at least one processor, as part of the network module. Further, this step may be part of a step 502 for providing a network module to be associated with a host machine and to receive communication including messages having data. Then, a further step or sub-step of such one or more methods may include performing, using the at least one processor, the transmission of the subset of the messages or the data on behalf of a central processing unit (CPU) or a graphical processing unit (GPU) of the host machine.

In at least one embodiment, one or more of the methods herein may include a step or a sub-step for performing the aggregating of the subset of the data in a buffer associated with the network module till a predetermined threshold of the buffer is reached. Then, a further step or sub-step of such one or more methods may include performing the transmission of the subset of the messages or the data upon the predetermined threshold of the buffer being reached. In at least one embodiment, one or more of the methods herein may include a step or a sub-step for coalescing the messages or the data as part of the aggregation of the subset of the messages or the data based at least in part on at least one operation associated with the subset of the messages or the data.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors.

In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

Accordingly, in at least one embodiment, computer systems are configured to implement one or more services that singly or collectively perform operations of processes described herein and such computer systems are configured with applicable hardware and/or software that allow performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. References may also be made to providing, outputting, transmitting, sending, or presenting analog or digital data. In at least one embodiment, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. A system for message or data aggregation in computer networks, comprising:
   a network module of a host machine to receive communication comprising messages having data, the network module further to determine a plurality of destination host machines for the messages and to aggregate a subset of the messages or the data to be transmitted to one of the plurality of destination host machines, wherein the aggregation is based at least in part on a bandwidth and a buffer availability associated with the one of the plurality of destination host machines, and wherein the buffer availability is determined from a status communication between the one of the plurality of destination host machines and the host machine.
Clause 2. The system of clause 1, wherein the network module is further to:
   remove received metadata from the subset of the messages based in part on the subset of the messages destined for the one of the plurality of destination host machines;
   aggregate the data from the subset of the messages to provide the subset of the data; and add new metadata to the subset of the data, the new metadata identifying at least an execution unit associated with the one of the plurality of destination host machines, wherein the subset of the data is to be received by a process or thread associated with the execution unit.
Clause 3. The system of clause 1, further comprising:
   one or more of a network library, an application programming interface (API), or a High-Performance Computing (HPC) application on the host machine, as part of the network module, to initiate the transmission of the subset of the messages or the data between the host machine and the one of the plurality of destination host machines.
Clause 4. The system of clause 1, further comprising:
   a Network Interface Card (NIC), a SmartNIC, or a switch that comprises at least one processor, as part of the network module, wherein the at least one processor is to perform the transmission of the subset of the messages or the data on behalf of a central processing unit (CPU) or a graphical processing unit (GPU) of the host machine.
Clause 5. The system of clause 1, wherein the network module is further to aggregate the subset of the data in a buffer associated with the network module till a predetermined threshold of the buffer is reached, wherein the network module is to perform the transmission of the subset of the messages or the data upon the predetermined threshold of the buffer being reached.
Clause 6. The system of clause 1, wherein the network module is further to:
   perform a flush operation to cause the transmission of the subset of the messages or the data to the one of the plurality of destination host machines.
Clause 7. The system of clause 1, wherein the network module is further to:
   coalesce the messages or the data as part of the aggregation of the subset of the messages or the data based at least in part on at least one operation associated with the subset of the messages or the data.
Clause 8. The system of clause 1, further comprising:
   a plurality of buffers associated with the host machine and with the one of the plurality of destination host machines and registered with the network module of the host machine or with a destination network module of the one of the plurality of destination host machines, wherein the network module of the host machine is to receive information associated with the buffer availability, from the destination network module of the one of the plurality of destination host machines.
Clause 9. The system of clause 1, wherein the bandwidth is determined based, at least in part, on the status communication.
Clause 10. The system of clause 1, wherein the communication is queued in a data structure, wherein the data structure is controlled by a single process that is associated with an operating system or a processor thread.
Clause 11. A method for message or data aggregation in computer networks, comprising:
   providing a network module to be associated with a host machine and to receive communication comprising messages having data;
   determining, in the network module, a plurality of destination host machines for the messages;
   aggregating a subset of the messages or the data to be transmitted to one of the plurality of destination host machines, the aggregating based in part on a bandwidth and a buffer availability associated with the one of the plurality of destination host machines, and the buffer availability determined from a status communication between the one of the plurality of destination host machines and the host machine; and
   communicating the subset of the messages or the data to the one of the plurality of destination host machines.
Clause 12. The method of clause 11, further comprising:
   removing received metadata from the subset of the messages based in part on the subset of the messages destined for the one of the plurality of destination host machines;
   aggregating the data from the subset of the messages to provide the subset of the data; and
   adding new metadata to the subset of the data, the new metadata identifying at least an execution unit associated with the one of the plurality of destination host machines, wherein the subset of the data is to be received by a process or a thread associated with the execution unit.
Clause 13. The method of clause 11, further comprising:
   providing one or more of a network library, an application programming interface (API), or a High-Performance Computing (HPC) application on the host machine, as part of the network module; and
   initiating, using the one or more of the network library, the API, or the HPC application, the transmission of the subset of the messages or the data between the host machine and the one of the plurality of destination host machines.
Clause 14. The method of clause 11, further comprising:
   providing a Network Interface Card (NIC), a SmartNIC, or a switch that comprises at least one processor, as part of the network module; and
   performing, using the at least one processor, the transmission of the subset of the messages or the data on behalf of a central processing unit (CPU) or a graphical processing unit (GPU) of the host machine.
Clause 15. The method of clause 11, further comprising:
   performing the aggregating of the subset of the data in a buffer associated with the network module till a predetermined threshold of the buffer is reached; and
   performing the transmission of the subset of the messages or the data upon the predetermined threshold of the buffer being reached.
Clause 16. The method of clause 11, further comprising:
   coalescing the messages or the data as part of the aggregation of the subset of the messages or the data based at least in part on at least one operation associated with the subset of the messages or the data.
Clause 17. The method of clause 11, further comprising:
   registering, with the network module of the host machine or with a destination network module of the one of the plurality of destination host machines, a plurality of buffers associated with the host machine and with the one of the plurality of destination host machines; and
   receive, in the network module of the host machine, information associated with the buffer availability, from the destination network module of the one of the plurality of destination host machines.
Clause 18. A system for message or data aggregation in computer networks, comprising:
   one or more processing units of a network module to receive communication comprising messages having data, to determine a plurality of destination host machines for the messages and to aggregate a subset of the messages or the data to be transmitted to one of the plurality of destination host machines, wherein the aggregation is based at least in part on a bandwidth and a buffer availability associated with the one of the plurality of destination host machines, and wherein the buffer availability is determined from a status communication between the one of the plurality of destination host machines and the host machine.
Clause 19. The system of clause 18, the one or more processing units are further configured to:
   remove received metadata from the subset of the messages based in part on the subset of the messages destined for the one of the plurality of destination host machines;
   aggregate the data from the subset of the messages to provide the subset of the data; and
   add new metadata to the subset of the data, the new metadata identifying at least an execution unit associated with the one of the plurality of destination host machines, wherein the subset of the data is to be received by a process or thread associated with the execution unit.
Clause 20. The system of clause 18, the one or more processing units are further configured to:
   registering, with the network module of the host machine or with a destination network module of the one of the plurality of destination host machines, a plurality of buffers associated with the host machine and with the one of the plurality of destination host machines; and
   receive, in the network module of the host machine, information associated with the buffer availability, from the destination network module of the one of the plurality of destination host machines.

## Claims

1. A system for message or data aggregation in computer networks, comprising:
a network module of a host machine to receive communication comprising messages having data, the network module further to determine a plurality of destination host machines for the messages and to aggregate a subset of the messages or the data to be transmitted to one of the plurality of destination host machines, wherein the aggregation is based at least in part on a bandwidth and a buffer availability associated with the one of the plurality of destination host machines, and wherein the buffer availability is determined from a status communication between the one of the plurality of destination host machines and the host machine.

2. The system of claim 1, wherein the network module is further to:
remove received metadata from the subset of the messages based in part on the subset of the messages destined for the one of the plurality of destination host machines;
aggregate the data from the subset of the messages to provide the subset of the data; and
add new metadata to the subset of the data, the new metadata identifying at least an execution unit associated with the one of the plurality of destination host machines, wherein the subset of the data is to be received by a process or thread associated with the execution unit.

3. The system of claim 1 or 2, further comprising:
one or more of a network library, an application programming interface (API), or a High-Performance Computing (HPC) application on the host machine, as part of the network module, to initiate the transmission of the subset of the messages or the data between the host machine and the one of the plurality of destination host machines.

4. The system of claim 1, 2, or 3, further comprising:
a Network Interface Card (NIC), a SmartNIC, or a switch that comprises at least one processor, as part of the network module, wherein the at least one processor is to perform the transmission of the subset of the messages or the data on behalf of a central processing unit (CPU) or a graphical processing unit (GPU) of the host machine.

5. The system of any preceding claim, wherein the network module is further to aggregate the subset of the data in a buffer associated with the network module till a predetermined threshold of the buffer is reached, wherein the network module is to perform the transmission of the subset of the messages or the data upon the predetermined threshold of the buffer being reached.

6. The system of any preceding claim, wherein the network module is further to:
perform a flush operation to cause the transmission of the subset of the messages or the data to the one of the plurality of destination host machines.

7. The system of any preceding claim, wherein the network module is further to:
coalesce the messages or the data as part of the aggregation of the subset of the messages or the data based at least in part on at least one operation associated with the subset of the messages or the data.

8. The system of any preceding claim, further comprising:
a plurality of buffers associated with the host machine and with the one of the plurality of destination host machines and registered with the network module of the host machine or with a destination network module of the one of the plurality of destination host machines, wherein the network module of the host machine is to receive information associated with the buffer availability, from the destination network module of the one of the plurality of destination host machines.

9. The system of any preceding claim, wherein the bandwidth is determined based, at least in part, on the status communication.

10. The system of any preceding claim, wherein the communication is queued in a data structure, wherein the data structure is controlled by a single process that is associated with an operating system or a processor thread.

11. A method for message or data aggregation in computer networks, comprising:
providing a network module to be associated with a host machine and to receive communication comprising messages having data;
determining, in the network module, a plurality of destination host machines for the messages;
aggregating a subset of the messages or the data to be transmitted to one of the plurality of destination host machines, the aggregating based in part on a bandwidth and a buffer availability associated with the one of the plurality of destination host machines, and the buffer availability determined from a status communication between the one of the plurality of destination host machines and the host machine; and
communicating the subset of the messages or the data to the one of the plurality of destination host machines.

12. The method of claim 11, further comprising:
removing received metadata from the subset of the messages based in part on the subset of the messages destined for the one of the plurality of destination host machines;
aggregating the data from the subset of the messages to provide the subset of the data; and
adding new metadata to the subset of the data, the new metadata identifying at least an execution unit associated with the one of the plurality of destination host machines, wherein the subset of the data is to be received by a process or a thread associated with the execution unit.

13. The method of claim 11 or 12, further comprising:
providing one or more of a network library, an application programming interface (API), or a High-Performance Computing (HPC) application on the host machine, as part of the network module; and
initiating, using the one or more of the network library, the API, or the HPC application, the transmission of the subset of the messages or the data between the host machine and the one of the plurality of destination host machines.

14. The method of any of claims 11 to 13, further comprising:
registering, with the network module of the host machine or with a destination network module of the one of the plurality of destination host machines, a plurality of buffers associated with the host machine and with the one of the plurality of destination host machines; and
receive, in the network module of the host machine, information associated with the buffer availability, from the destination network module of the one of the plurality of destination host machines.

15. A system for message or data aggregation in computer networks, comprising:
one or more processing units of a network module to receive communication comprising messages having data, to determine a plurality of destination host machines for the messages and to aggregate a subset of the messages or the data to be transmitted to one of the plurality of destination host machines, wherein the aggregation is based at least in part on a bandwidth and a buffer availability associated with the one of the plurality of destination host machines, and wherein the buffer availability is determined from a status communication between the one of the plurality of destination host machines and the host machine.
